# EUROPEAN PATENT APPLICATION

(11) **EP 4 835 765 A1**
(43) Date of publication of application: **04.11.2026**
(21) Application number: 25382432.0
(22) Date of filing: 29.04.2025
(51) Int. Cl.: G06Q 10/08, G06K 7/14, G06T 5/80

(54) **METHODS AND SYSTEMS FOR PROCESSING IMAGES**

(71) Applicant: Universidad de Murcia, 30003 Murcia (ES)
(72) Inventor: GARCÍA CLEMENTE, Félix Jesús, Murcia (ES); LÓPEZ DE TERUEL ALCOLEA, Pedro Enrique, Murcia (ES); RUIZ GARCÍA, Alberto, Murcia (ES)
(74) Representative: Elion IP, S.L.

(57) **Abstract**

The disclosure refers to a computer implemented method and a system for processing images. It comprises receiving an input image stream from at least one camera, wherein each image of the input image stream comprises at least one geometric identification code, detecting each of the identification codes present in each input image, rectifying and resizing the detected identification codes and generating a set of metadata associated with the input image. The method further comprises generating an output image comprising the generated set of metadata associated with the input image and the rectified and resized identification codes present in the input image, wherein the rectified and resized identification codes are placed sequentially in alignment in a predefined location within the output image.

## Description

### TECHNICAL FIELD

The present disclosure relates to the field of digital image processing, and more particularly to a method and system for processing images that comprise at least one geometric identification code such as a barcode, a QR code or the like. This solution is especially useful for being implemented in automated package processing systems, warehouse automation systems and logistic automation systems in general.

### BACKGROUND OF THE INVENTION

There are applications that require reading identification codes such as barcodes or QR codes, among others. These types of applications are common in, for example, supply chain logistics processes. By way of example, an identification code can be used to identify an item, such as a product or merchandise, that is to be read by the computer systems of the company responsible for managing that product or merchandise. From this identification code, the associated information stored in the company's database can be accessed.

Manual reading systems are highly inefficient, as they require a user to read the codes one by one. To overcome these limitations, some solutions that automate the reading process and avoid human interaction have been developed in recent years. These systems normally employ either laser readers/scanners or camera-based technologies, often integrated into machine vision systems.

Laser readers and scanners are devices used to read and decode information stored in identification codes like barcodes and others. They work by emitting a laser beam that scans the identification code's pattern of dark and light symbols or characters. The readers and scanners capture the reflected light from the code and convert it into a digital signal, which is then decoded into readable data, such as product information or inventory numbers. Laser readers and scanners are commonly used in retail, warehouses, and logistics due to their speed and accuracy in reading codes from various surfaces. However, these laser readers and scanners are designed for close-range reading and controlled logistical environments, such as production lines, where distances, code positions and lighting conditions are predictable and optimal.

On the other hand, camera-based systems are designed for less structured scenarios, where codes can be found at varying distances from the camera, lighting conditions are unpredictable, and code positions are not pre-established or fixed. These camera-based systems are the most versatile and offer advanced solutions for companies with complex logistics processes in the supply chain.

However, camera-based systems face significant computational challenges, as they must process and read the identification codes present in each of the images in the video stream in real time. This process includes identifying the codes in the images, extracting the data and ensuring accuracy, which requires specialized hardware and high processing power. In companies that employ multiple cameras, the cost associated with installing dedicated servers to process the camera images can escalate considerably.

Additionally, the computational load associated with managing the identification codes in automated package processing systems and supply chain logistics systems, that manage a high volume of items, present several challenges. In environments where items are processed at high speeds, the system must handle a vast amount of data in real-time. The constant scanning, decoding and post-processing of identification codes require significant processing power to ensure the required level of accuracy and efficiency. As the number of items increases, the system's ability to quickly capture, interpret, and store this data becomes increasingly strained. This can lead to delays, errors in tracking, or even system failures if not managed properly. Additionally, the need for seamless integration with other logistics software and hardware adds another layer of complexity, requiring robust infrastructure and sophisticated algorithms to maintain smooth operations.

Thus, there is a need for state-of-the-art image processing methods and systems that, by using cameras to read these identification codes, can streamline the reading process of the identification codes and alleviate the associated computational load for the logistics software and hardware (e.g., an application server that makes use of the information decoded form the identification codes) that is in charge of post-processing the captured information.

### DESCRIPTION

The solution described herein relates to a method and a system that processes an image stream captured by one or more cameras, images containing at least one geometric identification code, and transforms the images to facilitate and alleviate the computational load associated with the post-processing of said images in real-time applications.

A first object of the present disclosure relates to a computer-implemented method for processing images. Said method comprises receiving a stream of input images from at least one camera. Each of the images of the input image stream comprises at least one identification code. As used herein, the expression "identification code" refers to geometric identification codes comprising a set of geometric elements representing strings of characters that identify an item, e.g., object, article or product, in a unique, global and unambiguous way at a point in a logistic chain. As used herein, the term "item" may refer to any object, article or product, that needs to be identified, tracked and managed in an efficient way. Examples of these items may be packages, envelopes or bulks containing clothing, cosmetics, footwear, electronics, appliances, food, etc., among many other objects, articles or products.

In addition, the method, for each input image (original image) of the input image stream, comprises the following steps:
detecting each of the geometric identification codes present in the input image. There may be one or more identification codes of the same or different type in an image. Those input images not containing any identification code could be discarded at this point of the process. For example, contour detection algorithms, canny edge detection algorithms or Sobel gradient algorithms could be used to detect the presence of the identification codes in the input images. Other algorithms with the capacity of detecting the presence of geometric identification codes in images could be also used;
rectifying, by applying an image rectification algorithm, the detected identification codes to correct a perspective and geometric distortions of each identification code. This image rectification algorithm can display the identification codes aligned and undistorted. As used herein, an image rectification algorithm is an algorithm able to geometrically transform an image so that certain distortions are corrected, usually to make lines straight or to align images taken from different viewpoints. Examples of these image rectification algorithms are homography-based rectification algorithms that use a homography matrix to warp the image, stereo rectification algorithms that aligns left and right camera images so that epipolar lines are horizontal and matching pixels lie on the same row and lens distortion correction algorithms that rectifies images by removing barrel or pincushion distortion caused by camera lenses, among many other image rectification algorithms;
resizing, by applying an image resizing algorithm, the rectified identification codes so they all have the same predefined size. These image resizing algorithms can change the dimensions (width and height) of the images, either scaling them up (enlarging) or, preferably, scaling them down (shrinking), while trying to preserve as much image quality as possible. Some examples of these image resizing algorithms are nearest neighbor interpolation algorithms, bilinear interpolation algorithms and bicubic interpolation algorithms, among many others. For example, these images may be resized to be 16x16, 32x32, 16x32, 64x64 pixels, etc.;
generating a set of metadata associated with the input image, wherein the set of metadata at least comprises: a timestamp of the input image within the input image stream, a size of the input image, a number of identification codes present in the input image, the predefined size of the resized identification codes and first spatial coordinates of each of the identification codes present in the input image; and
generating an output image comprising the generated set of metadata and the rectified and resized identification codes present in the input image, the rectified and resized identification codes being placed sequentially in alignment in a predefined location within the output image.

The output images are smaller in size than the input images and have the identification codes placed one after the other at a known specific location in the output image. Therefore, since the applications that will use these output images will know the predefined location of these identification codes in the output images and its size (known from the metadata), which have been also rectified to make them easier to read, and all the identification codes have been resized to have the same size, said applications will be able to quickly and easily access and extract the identification codes (the applications do not have to look for them in the output images) from the output images. This easy access to the identification codes, together with the reduced size of the images, significantly lowers the computational load associated with image post-processing.

In some embodiments, the method comprises compressing the input image by a predetermined scale factor obtaining a compressed image. For example, this predetermined scale factor may range from 1 to 0, where the close the predetermined scale factor is to zero, the greater the compression factor applied to the input image and vice versa. In this example, 1 may indicate that the input image should keep the original size and 0 may indicate that the compressed image should not be generated. Preferably, this predetermined scale factor may be 0.75, 0.5 or 0.25. In such embodiment, the method further comprises including the scale factor used to compress the input image and second spatial coordinates of each of the identification codes present in the compressed image in the set of metadata associated with the input image. The method also comprises including the compressed image in the output image. Generating this compressed image may be useful for those applications that require some information of the item bearing the codes. For example, the compressed image could be used to check the status of the item at the time in which the image was captured or to attest to the presence of the code on the item at a specific point in the supply chain.

When the output images include a compressed version of the corresponding input image, the output images will have a size that will depend mainly on the size of the respective compressed image and thus, on the predetermined scale factor applied to the input image. The number of bits associated with the set of metadata and the images of the identification codes that are incorporated into the output image do not significantly increase the size of the output image. Hence, the resulting output image is still significantly smaller than the original input image, which means less computational load on the application server that will receive it later for post-processing it.

In some embodiments, the method comprises generating each output image with the corresponding identification codes being placed sequentially in alignment in a top area of the output image. By placing the identification codes at the top portion of the output image, faster computational access to the information contained in the identification codes is allowed for the application that will subsequently make use of the output image stream. Since the application server reading program will know in advance where the identification codes will be located, it does not have to search for them in the output image, which will computationally simplify the reading operation.

In some embodiments, the method comprises generating the output image with the identification codes placed sequentially in alignment on the top and left side of the output image. Since reading programs generally read the pixel matrix of images from the top to the bottom and from left to right, this disposition of the identification codes in the output images will allow an even faster computational access to information contained in the identification codes by the application that will subsequently make use of the output image stream. Alternatively, the method may comprise generating the output image with the identification codes being placed sequentially in alignment on the top and right side of the output image.

In some embodiments, the at least one identification code is selected from a group comprising barcodes, QR codes, data matrices, Aztec codes, MaxiCodes, DotCodes, Fiducial markers, Augmented Reality Markers and any combination thereof. A barcode is a one-dimensional identification code formed by a string of parallel lines of different thicknesses that is able to code a limited number of characters (10-20 characters), e.g., EAN-14, UPC, Code 39 or Code 128. A QR code is a two-dimensional identification code square-shaped with patterns in three corners and black and white blocks, that is able to code long texts, URLs, numbers, etc. Data matrices are matrices of black and white dots with an L-shaped frame. Aztec Codes have square-shaped patterns with a concentric center. MaxiCodes have dot patterns with a central "eye". DotCodes have also dot patterns but less structured than other identification codes. Fiducial Markers include specific geometrical patterns, such as ArUco or AprilTag, and are generally used in artificial vision and robotics applications for positioning and navigation allowing them to identify the position and 3D orientation. Augmented Reality Markers are codes with more artistic or specific patterns, detectable by augmented reality applications.

In some embodiments, the at least one identification code is contained in a visible closed polygonal line, i.e., a hollow polygon, preferably a square or rectangle. This facilitates both detection of the identification codes in the input images, e.g., by contour detection algorithms, and their rectification for the generation of the output images.

In some embodiments, the visible closed polygonal line is highlighted in a color that contrasts with that of the background on which it is printed or painted. For example, it may be painted black on a white background. This increased contrast facilitates detection by an algorithm combining contour detection and geometric analysis techniques.

In some embodiments, the method comprises sending the generated output images to a remote electronic device (e.g., an application server) running at least one application that makes use of the output images. For example, an automatic merchandise identification application, among many other applications that make use of product and/or merchandise identification codes in, for example, logistics chains.

In some embodiments, the set of metadata comprises at least one of a motion vector of each identification code and a number of consecutive and uninterrupted times a particular identification code has been identified in the input image stream. The motion vector of the identification code can be calculated by determining its change of position relative to the static camera that is gathering the input image stream in a determined time slot. By including the motion vector of the identification codes in the metadata of the output images, the applications that will receive the output stream will know the direction the item having that code is taking within a supply chain and, for example, will be able to determine if the item is being loaded onto a truck or sent to a warehouse when it shouldn't be. Based on this, the system may trigger alerts. By including the number of consecutive and uninterrupted times a particular identification code has been identified in the input image stream in the metadata of the output images it is allowed to track items from the moment they first appeared in the input image stream until they went out of the camera's range, allowing for more comprehensive control over the code's life cycle.

A second object of the present disclosure is a computer program comprising instructions which, when executed by a processor, cause the processor to carry out the method previously disclosed.

A third object of the present disclosure refers to a computer-readable medium storing instructions that, when executed by a processor, perform the method previously described.

A fourth object of the present disclosure is a system for processing images that comprises a receiving unit configured to receive an input images stream, wherein each input image of the input image stream comprises at least one identification code. The identification codes are geometric identification codes comprising a set of geometric elements representing strings of characters that identify a particular item.

The system further comprises a processing unit configured to receive the input image stream, and, for each input image (original image) of the input image stream, the processing unit is further configured to:
detect each of the identification codes present in the input image;
rectify, by applying an image rectification algorithm, the detected identification codes to correct a perspective and geometric distortions of each identification code;
resize, by applying an image resizing algorithm, the rectified identification codes so they all have the same predefined size;
generate a set of metadata associated with the original image, wherein the set of metadata at least comprises: a timestamp of the image within the image stream, a size of the original image, a number of identification codes present in the original image, the predefined size of the resized identification codes and a first spatial coordinates of each of the identification codes present in the original image; and
generate an output image comprising the set of metadata associated with the corresponding original image, and the rectified and resized identification codes present in the original image, the rectified and resized identification codes being placed sequentially in alignment in a predefined location within the output image.

In some embodiments, the processing unit is further configured to:
compress the input image by a predetermined scale factor obtaining a compressed image;
include the scale factor used to compress the input image and second spatial coordinates of each of the identification codes present in the compressed image in the set of metadata associated with the input image; and
include the compressed image in the output image.

In some embodiments, the system comprises at least one camera configured to generate the input image stream. For example, the cameras used to capture the images of the identification codes may be machine vision cameras (high-speed, high-resolution), line scan cameras (especially convenient for conveyor belts where items pass rapidly in a single direction), area scan cameras (useful in environments where items are stationary or move slow) or smart cameras (common in warehouse automation).

In some embodiments, the system comprises a remote electronic device that is configured to receive the generated output images and to run an application that makes use of the received output images. For example, an automatic merchandise identification application, an inventory management application, a product traceability application, a quality control application, among many other applications that make use of product and/or merchandise identification codes in, for example, logistics chains.

The solution described herein not only simplifies the process of detecting and reading identification codes in images but also offloads the most computationally intensive tasks from remote electronic devices running the application. By performing the heavy processing within the system herein disclosed, the remote application is able to handle a greater number of simultaneous output image streams. Moreover, the network traffic volume is reduced by transforming the input image stream into a compact output stream, which in turn allows the network to support a larger number of concurrent output streams.

### BRIEF DESCRIPTION OF THE DRAWINGS

To complete the description and in order to provide for a better understanding of the disclosure, a set of drawings is provided. Said drawings form an integral part of the description and illustrate an example of the disclosure, which should not be interpreted as restricting the scope of the disclosure, but just as an example of how the disclosure can be carried out.

The drawings comprise the following figures:
Figure 1 shows a flow diagram of a method for processing images, according to an embodiment of the disclosure.
Figure 2 shows a system for processing images, according to an embodiment of the disclosure.
Figure 3 shows an input image and a first version of the output image only including the identification codes and the metadata and a second version that also includes the compressed input image, according to an embodiment of the disclosure.
Figure 4 shows how the output image is generated from a specific input image, according to a particular embodiment of the disclosure.
Figure 5 shows a block diagram of a system for processing images, according to another embodiment of the disclosure.

### DESCRIPTION OF EXAMPLE EMBODIMENTS

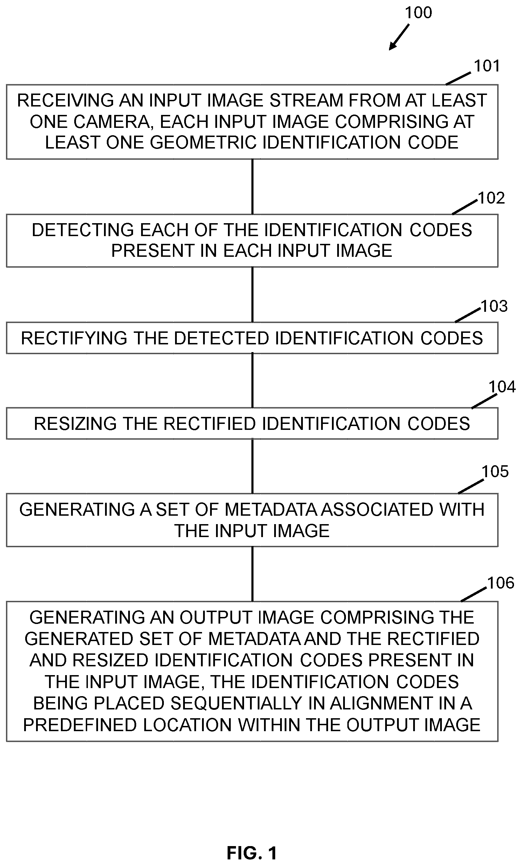

Figure 1 shows a flow diagram 100 of a method for processing images, according to an embodiment of the disclosure.

At step 101 of method 100, a stream of input images captured by at least one camera, for example a line scan camera pointing to a conveyor belt along which packages are passing in a single direction. Each of the images of the input image stream comprises one or more geometric identification codes. These identification codes may be barcodes, QR codes, Data matrices, Aztec Codes, MaxiCodes, DotCodes, Fiducial Markers or Augmented Reality Markers. These identification codes may be all of the same type or of different types and each item may have one or more than one of these codes attached thereto or printed onto.

At step 102 of method 100, each of the identification codes present in each of the input images of the input image stream are detected. Those images that may not have any identification code would be discarded at this point of the process. Contour detection algorithms may be used to detect the presence of the identification codes in each of the input images.

At step 103 of method 100, an image rectification algorithm, for example a homography-based rectification algorithm, is applied to each of the detected identification codes to correct their perspective and geometric distortion.

At step 104 of the method 100, an image resizing algorithm, for example a Nearest Neighbor interpolation algorithm, is applied to each one of the rectified identification codes so they all have the same predefined size. By way of example, all the identification codes may be resized to have a size of 32x32 pixels.

At step 105 of method 100, a set of metadata associated with each input image having at least one identification code is generated. This metadata at least comprises: a timestamp of the input image within the input image stream, a size of the input image, a number of identification codes present in the input image, the predefined size of the resized identification codes and first spatial coordinates of each of the identification codes present in the input image.

At step 106 of method 100, an output image comprising the generated set of metadata and the previously rectified and resized identification codes present in the input image is generated. The identification codes will be placed contiguously in alignment in a predefined location within the output image.

In those cases in which the application that is going to receive the output image stream needs some information that may be derived from the input image, a compressed version of each of the input images having the identification codes can be generated. The compression ratio used for compressing the input images may vary depending on the particular application of this solution. In such cases, the set of metadata may further incorporate the scale factor used to compress the input image and second spatial coordinates of each of the identification codes present in the compressed image.

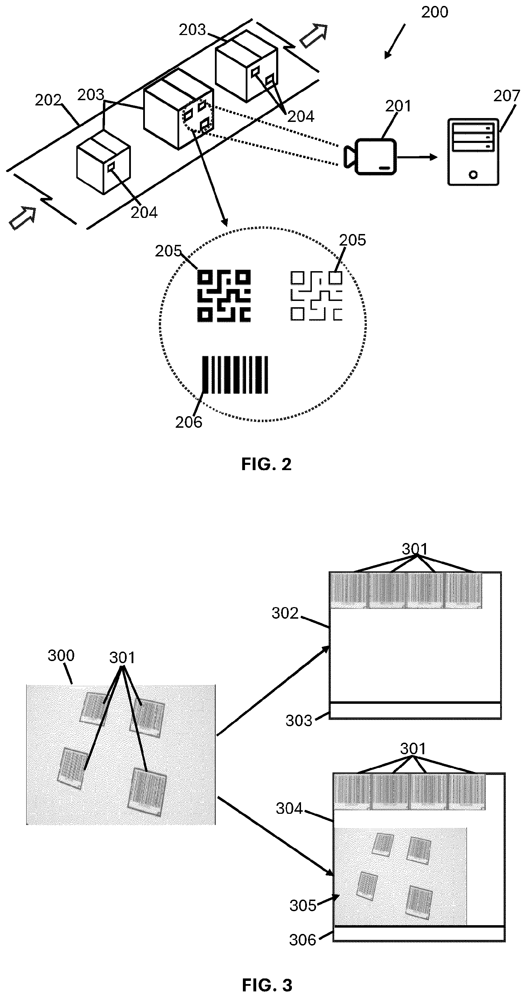

Figure 2 shows a system 200 for processing images, according to an embodiment of the disclosure. It should be understood that the system 200 depicted in Figure 2 may include additional components and that some of the components described herein may be removed and/or modified without departing from the scope of the example system 200. Additionally, implementation of system 200 is not limited to such an example.

Said Figure 2 shows a line scan camera 201 pointing to a conveyor belt 202 along which packages 203 are passing from left to right. Each of the packages 203 has attached or printed one or more identification codes 204. In this particular embodiment, these codes are QR codes 205 and barcodes 206, although in some other implementations there may be other types of geometric identification codes attached to or printed onto the packages 203. While Figure 2 shows carboard boxes 203, the items having the identification codes, may be envelopes or parcels or goods of any other nature and shape. Besides, although figure 2 shows one single camera for capturing the images of the identification codes, there may be a plurality of cameras arranged around the area through which the packages are being conveyed to ensure that images of the identification codes are always gathered by at least one of the cameras of the plurality of cameras, independently of the orientation and position of the identification codes. Moreover, while in Figure 2 each image contains the identification codes of one single item, in some other implementations, each image may capture the identification codes of more than one item.

The input image stream is processed as disclosed in Figure 1 by a processing unit, e.g., processor, CPU, GPU, microprocessor or similar, incorporated into the camera 201 itself. Alternatively, the input image stream may be sent, by means of a wired or a wireless connection, to a remote computing device, for example, a computer or a server, where they are processed as disclosed in Figure 1. The output image stream generated is then sent to an application server 207 where the output images can be post-processed. This post-processing depends on the particularities of the application that will make use of them. For example, the identification codes in the output images can be used to classify the goods and direct them to one line or another in a supply chain of a logistics system.

Figure 3 shows an input image 300, having a resolution of 1920×1080 pixels, that includes four barcodes 301, a first version 302 of the corresponding output image (generated as disclosed in, for example, Figure 1) only including the barcodes 301 and the metadata 303, and a second version 304 of the output image (also generated as disclosed in, for example, Figure 1) that also includes the compressed input image 305, according to an embodiment of the disclosure. The input image 300 is compressed using a compression factor of 0.1 so that the compressed image 305 has a resolution of 192×108 pixels.

In such embodiment, the four barcodes 301 in the input image 300 are misaligned and present some spatial and geometric distortions. The process for obtaining said output images 302,304 may begin with a stream of input images from a camera (not show), captured at a rate of 30 frames per second (fps). The barcodes 301 in the original image 300 have been rectified, resized, aligned, and arranged contiguously in the upper left corner of the output images 302,304, both with a resolution of 256x192 pixels.

The metadata 303 in the first version 302 of the output image comprises the timestamp of the input image 300 within the input image stream, for example 500ms, the size of the input image, 1920×1080 pixels, the number of identification codes present in the input image 300, four, the predefined size of the resized identification codes, 64x64 pixels and the spatial coordinates of each of the identification codes 301 present in the input image 300. The first spatial coordinates may correspond to the corners of the identification codes 301 and may be calculated from one of the corners of the input image 300 such that each of the barcodes 301 may be defined by four spatial coordinates corresponding to each of its corners.

The metadata 306 in the second version 304 of the output image further comprises the scale factor used to compress the original input image 300, which is 0,1, and the spatial coordinates of each identification code in the compressed image 305. The second spatial coordinates may further correspond to the corners of the identification codes in the compressed image 305. The value of these second spatial coordinates are the values of the first spatial coordinates multiplied by the scale factor used to compress the input image 300, in this case, 0,1.

While Figure 3 shows output images 302,304 generated from an original image 300 containing 4 barcodes 301, other output images could be generated according to the method and system herein disclosed from input images containing a different number, position and type of geometrical identification codes.

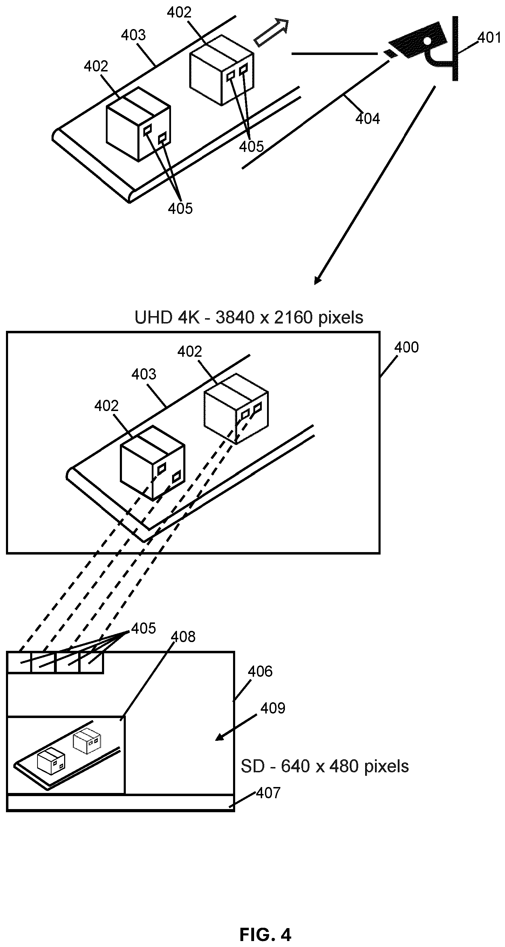

Figure 4 shows how the output image 406 is generated from a specific input image 400, according to a particular embodiment of the disclosure.

In such embodiment, the camera 401 has a view field 404 such that it can capture images of a portion of a conveyor belt 403 on which a series of items 402 are moving in a particular direction, each of these items 402 being identified by geometric identification codes 405. In this specific example, the camera 401 has captured an image 400 of two boxes 402, where each box is identified by two geometric identification codes, such as barcodes, QR codes, data matrices, Aztec codes, MaxiCodes, DotCodes, Fiducial markers, Augmented Reality Markers and any combination thereof. The input image 400 captured by the camera 401 is an Ultra High Definition (UHD) 4K image with a size of 3840x2160 pixels. This input image 400 is compressed using a compression factor of 0.1 (the compressed image has a size then of 0.1*(3840x2160) = 384x216 pixels), and the output image 406 has a total size of 640x480 pixels (Standard Definition), and the four codes 405 in the input image 400 are identified, rectified and resized to have a size of 32x32 pixels. The output image 406 is generated with the four identification codes 405 being arranged contiguously in alignment in the upper left corner of the output image 406, the compressed image 408 is placed below the codes 405 and the corresponding metadata 407 is located below the compressed image 408. The remaining free space 409 in the output image 406 can be used to include mode rectified and resized identification codes.

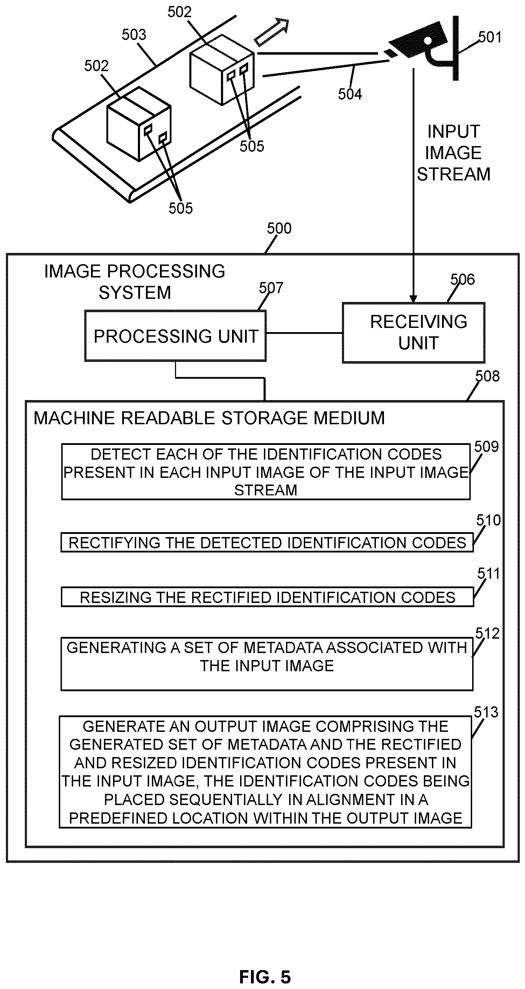

Figure 5 shows a block diagram of a system 500 for processing images, according to an embodiment of the disclosure. It should be understood that the system 500 depicted in FIG. 5 may include additional components and that some of the components described herein may be removed and/or modified without departing from the scope of the example system 500. Additionally, implementation of the system 500 is not limited to such an example.

Figure 5 depicts a comprises a camera 501 that is configured to capture images of a series of packages 502 positioned on a conveyor belt 503, such that the packages pass through the camera's field of view. The packages 502 and the camera 501 are arranged so that the camera 501 is capable of capturing images of the areas of the packages 502 where identification codes 505 are located. These identification codes 505 may include, but are not limited to, barcodes and QR codes. Although a single camera 501 is illustrated in figure 5, the system 500 may alternatively comprise a plurality of cameras 501 arranged around the region through which the packages 502 are conveyed. In this manner, if the identification codes 505 of a given package do not fall within the field of view 504 of one of the cameras (for example, the identification codes may be on different planes or one package may partially cover another package), these identification codes 505 may fall within the field of view of another camera of the plurality of cameras, thereby ensuring that at least one image of all identification codes on all packages is reliably captured.

The system for processing images 500 comprises a receiving unit 506 configured to receive the input image stream generated by the camera 501, a processing unit 507 communicatively coupled to the receiving unit 506 and a machine-readable storage medium 508 that stores instructions 509-513 to be executed by the processing unit 507. It should also be understood that the processing unit 507 may represent a combination of software and hardware for executing the instructions stored in the machine-readable storage medium 508.

In such embodiment, the processing unit 507, once the input image stream has been received from the camera and for each input image of said input image stream, detects 509 each of the identification codes present in each of the input images and rectifies 510 and resizes 511 the input image so the perspective and geometric distortions of each identification codes present in the input image are corrected and the identification codes have all the same predefined size. The processing unit 507 further generates 512 a set of metadata associated with the corresponding input image, wherein the set of metadata at least comprises: a timestamp of the input image within the input image stream, a size of the input image, a number of identification codes present in the input image, the predefined size of the identification codes and first spatial coordinates of each of the identification codes present in the input image, and generates 513 an output image comprising the generated set of metadata and the rectified and resized identification codes present in the input image, the identification codes being placed contiguously in alignment in a predefined location within the output image.

The processing unit 507 may include hardware logic to perform the functionalities described above in relation to instructions 509-513. The machine-readable storage medium 508 may be located either in the computing device executing the machine-readable instructions, or remote from but accessible to the computing device (e.g., via a computer network) for execution. In particular, the system 500 herein disclosed may be an integral part of the camera 501, so the image processing is carried out locally, or may be a remote system communicatively coupled to the camera 501.

As used herein, a "machine-readable storage medium" may be any electronic, magnetic, optical, or other physical storage apparatus to contain or store information such as executable instructions, data, and the like. For example, any machine-readable storage medium described herein may be any hardware memory such as a finite state machines or similar. Further, any machine-readable storage medium described herein may be non-transitory. In examples described herein, a machine-readable storage medium or media may be part of an article (or article of manufacture). An article or article of manufacture may refer to any manufactured single component or multiple components.

In this text, the term "comprises" and its derivations (such as "comprising", etc.) should not be understood in an excluding sense, that is, these terms should not be interpreted as excluding the possibility that what is described and defined may include further elements, steps, etc. The term "another," as used herein, is defined as at least a second or more. The term "coupled," as used herein, is defined as connected, whether directly without any intervening elements or indirectly with at least one intervening elements, unless otherwise indicated. Two elements can be coupled mechanically, electrically, or communicatively linked through a communication channel, pathway, network, or system.

The invention is obviously not limited to the specific embodiments described herein, but also encompasses any variations that may be considered by any person skilled in the art (for example, as regards the choice of materials, dimensions, components, configuration, etc.), within the general scope of the invention as defined in the claims.

## Claims

1. A computer implemented method (100) for processing images, **characterized in that** it comprises the steps of:
receiving (101) an input image stream from at least one camera, wherein each image of the input image stream comprises at least one identification code, the identification code being a geometric identification code comprising a set of geometric elements representing strings of characters that identify an item;
wherein for each input image of the input image stream, the method further comprises:
detecting (102) each of the identification codes present in the input image;
rectifying (103), by applying an image rectification algorithm, the detected identification codes to correct a perspective and geometric distortions of each identification code;
resizing (104), by applying an image resizing algorithm, the rectified identification codes so they all have the same predefined size;
generating (105) a set of metadata associated with the input image, wherein the set of metadata at least comprises: a timestamp of the input image within the input image stream, a size of the input image, a number of identification codes present in the input image, the predefined size of the resized identification codes and first spatial coordinates of each of the identification codes present in the input image; and
generating (106) an output image comprising the generated set of metadata associated with the input image and the rectified and resized identification codes present in the input image, wherein the rectified and resized identification codes are placed sequentially in alignment in a predefined location within the output image.

2. The method (100) according to claim 1, comprising:
compressing the input image by a predetermined scale factor obtaining a compressed image;
including the scale factor used to compress the input image and second spatial coordinates of each of the identification codes present in the compressed image in the set of metadata associated with the input image; and
including the compressed image in the output image.

3. The method (100) according to claim 1 or 2, comprising generating the output image with the identification codes being placed sequentially in alignment in a top area of the output image

4. The method (100) according to any one of the preceding claims, comprising generating the output image with the identification codes being placed sequentially in alignment on a top and left corner of the output image or being placed sequentially in alignment on a top and right corner of the output image.

5. The method (100) according to any one of the preceding claims, wherein the at least one identification code comprises at least one data matrix or at least one barcode.

6. The method (100) according to any one of the preceding claims, wherein the at least one identification code is selected from a group comprising barcodes, QR codes, data matrices, Aztec codes, MaxiCodes, DotCodes, Fiducial markers, Augmented Reality Markers and any combination thereof.

7. The method (100) according to any one of the preceding claims, wherein the at least one identification code is contained inside a visible closed polygonal line, preferably a square or rectangle.

8. The method (100) according to claim 7, wherein the visible square or rectangle is highlighted in a color that contrasts visually with the background on which the at least one identification code is placed.

9. The method (100) according to any one of the preceding claims, comprising sending the generated output images to a remote electronic device running an application that makes use of the output images.

10. A computer program comprising instructions which, when executed by a processor, cause the processor to perform the method of any one of claims 1 to 9.

11. A computer-readable medium storing instructions that, when executed by a processor, perform the method of any one of claims 1 to 9.

12. A system (500) for processing images, **characterized in that** it comprises:
a receiving unit (506) configured to receive an input images stream, wherein each input image of the input image stream comprises at least one identification code (505), the at least one identification code (505) being a geometric identification code comprising a set of geometric elements representing strings of characters that identify an item; and
a processing unit (507) communicatively coupled with the receiving unit (506) that, for each image of the stream of input images, is configured to:
detect (509) each of the identification codes (505) present in the input image;
rectify (510), by applying an image rectification algorithm, the detected identification codes (505) to correct a perspective and geometric distortions of each identification code;
resize (511), by applying an image resizing algorithm, the rectified identification codes so they all have the same predefined size;
generate (512) a set of metadata associated with the input image, wherein the set of metadata at least comprises: a timestamp of the input image within the input image stream, a size of the input image, a number of identification codes present in the input image, the predefined size of the resized identification codes and first spatial coordinates of each of the identification codes present in the input image; and
generate (513) an output image comprising the set of metadata associated with the input image, and the rectified and resized identification codes present in the input image, the rectified and resized identification codes being placed sequentially in alignment in a predefined location within the output image.

13. The system (500) according to claim 12, wherein the processing unit is further configured to:
compress the input image by a predetermined scale factor obtaining a compressed image;
include the scale factor used to compress the input image and second spatial coordinates of each of the identification codes present in the compressed image in the set of metadata associated with the input image; and
include the compressed image in the output image.

14. The system (500) according to claim 12 or 13, comprising at least one camera (501) configured to generate the input image stream.

15. The system (500) according to any one of claims 12 to 14, comprising a remote electronic device that is configured to receive the generated output images and to run an application that makes use of the received output images.
